# EUROPEAN PATENT SPECIFICATION

(11) **EP 4 226 522 B1**
(45) Date of publication and mention of the grant of the patent: **02.12.2026**
(21) Application number: 20862015.3
(22) Date of filing: 07.10.2020
(51) Int. Cl.: H04B 7/185, H04W 28/06

(54) **METHOD FOR THE COMPRESSION OF DATA COLLECTED BY A LEO SATELLITE FROM A PLURALITY OF IOT DEVICES AND THE TRANSMISSION TO A BASE STATION AND ASSOCIATED SYSTEM**
VERFAHREN ZUR KOMPRIMIERUNG VON DATEN, DIE VON EINEM LEO-SATELLITEN VON MEHREREN IOT-VORRICHTUNGEN GESAMMELT WURDEN, UND ÜBERTRAGUNG AN EINE BASISSTATION UND ZUGEHÖRIGES SYSTEM
PROCÉDÉ DE COMPRESSION DE DONNÉES RECUEILLIES PAR UN SATELLITE LEO À PARTIR D'UNE PLURALITÉ DE DISPOSITIFS IOT ET DE TRANSMISSION À UNE STATION DE BASE, ET SYSTÈME ASSOCIÉ

(43) Date of publication of application: 16.08.2023
(73) Proprietor: Eutelsat SA, 92130 Issy Les Moulineaux (FR)
(72) Inventor: TRIQUET, François, 92130 Issy- les-Moulineaux (FR); THIEBAUT, Matthieu, 92130 Issy- les-Moulineaux (FR); BLANCHER, Julien, 92130 Issy- les-Moulineaux (FR)
(74) Representative: Cabinet Camus Lebkiri
(86) International application number: PCT/IB2020/001120
(87) International publication number: WO 2022/074418

(56) References cited:
- WO-A1-99/21296
- WO-A1-99/21296
- US-A1- 2017 289 822
- US-A1- 2017 289 822
- US-B1- 10 652 220
- US-B1- 10 652 220

## Description

A LEO satellite receiving messages can aggregate the messages, to transmit them when it passes over a ground-based station. The batch of messages to be sent from a LEO satellite can be bulky, for example comprising thousands of messages, as it comprises all the messages received during one orbital period. This transmission requires a lot of bandwidth, as well as flexible amounts of storage. Indeed, the quantity of collected pieces data is not the same at each orbital period, meaning that for some orbital periods great amounts of storage space is needed while for some other orbital periods low amounts of storage space is needed. This results in an inefficient use of storage space on the LEO satellite's side.

There is therefore a need for a solution to efficiently store multiple pieces of data collected from IoT devices by a LEO satellite while requiring less bandwidth for the transmission of said data by the LEO satellite to a ground-based station.

The documents US 2017/289822 A1 and WO 99/21296 A1 are known from the prior art.

### SUMMARY OF THE INVENTION

The present document solves the above-mentioned problems by providing solutions for a lower storage need on the satellite side and for a lower bandwidth use to transmit data to a ground-based station from a non-geostationary satellite.

The invention is as defined in the independent claims. Further aspects are disclosed in the dependent claims.

Thanks to the invention, bandwidth used to transmit the plurality of messages is reduced as compared to known solutions of the state of the art, as the messages are compressed according to the invention. The messages can be compressed as they are received and concatenated to the already compressed previously received messages. That way, the compression can be "on-the-fly" and not all at once before transmitting.

In the invention, the global header and the packet header can comprise several parameter fields. The parameter(s) can be for example, but not limited to, a timestamp, the RSSI (Received Signal Strength Indicator), the SNR (Signal to Noise Ratio), the frequency. Storing for each received packet the difference between the value of a parameter in a global header and the value of the parameter instead of storing for each received packet the actual value of the parameter permits to store and transmit less information, dividing the size of the parameter to store. Having a global header further permits to store and transmit information once in the global header instead of for every packet to store and transmit.

The compression method according to the invention also permits to streamline the storing of the messages by the non-geostationary satellite, as not all the stored messages are transmitted at each pass over a ground-based station, but only a predefined amount of records.

The invention finds a particular interest in the collection of sensor data from IoT devices by a LEO satellite, as this type of data can be created in large numbers and can take space to be stored in the LEO satellite and bandwidth to be transmitted to a base station.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a communication system according to the invention,
- Figure 2 is another schematic representation of the communication system according to the invention,
- Figure 3 is a schematic representation of a method according to the invention carried out by a non-geostationary satellite,
- Figure 4 is a schematic representation of exchanges between different entities of the communication system according to the invention,
- Figure 5 is a schematic representation of a step of the method according to the invention,
- Figure 6 is a schematic representation of an example of a global header of a frame format according to the invention,
- Figure 7 is a schematic representation of an example of a packet header of a frame format according to the invention,
- Figure 8 is a schematic representation of an example of fragmentation of a piece of data into several data payloads according to the invention.

### DETAILED DESCRIPTION

For greater clarity, identical or similar elements are marked by identical reference signs in all of the figures.

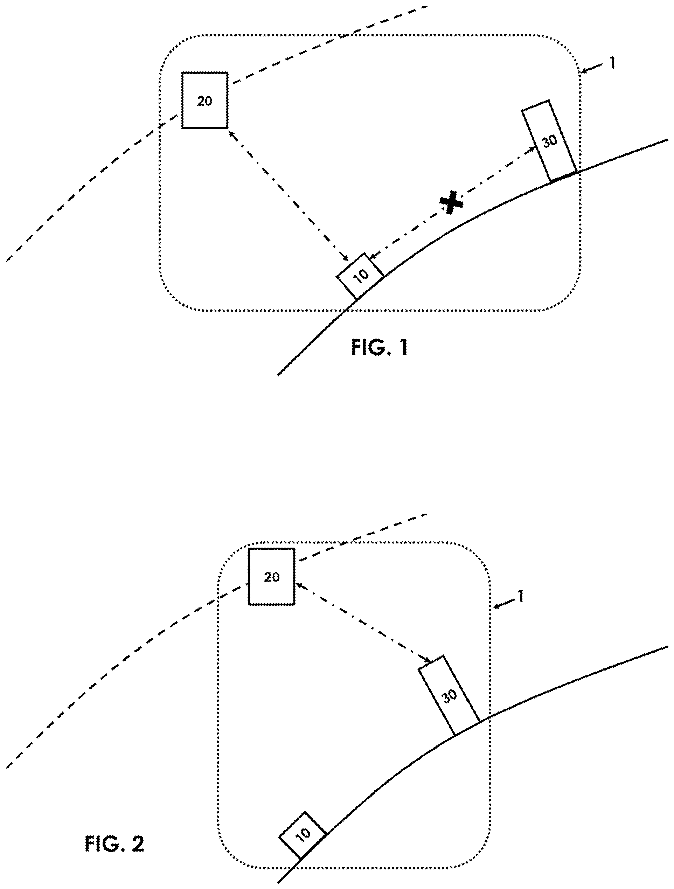

Figure 1 shows a schematic representation of the communication system 1 implementing the method according to the invention. The communication system 1 comprises a ground-based device 10, a non-geostationary satellite 20 and a ground-based station 30.

The non-geostationary satellite 20 is a satellite orbiting a celestial body such as the Earth. When the non-geostationary satellite 20 orbits the Earth, it can then be a Low Earth Orbit (LEO) satellite (with an orbit altitude below 2000 km) or a Medium Earth Orbit (MEO) satellite (with an orbit altitude above 2000 km and below geosynchronous orbit). The non-geostationary satellite 20 comprises at least a processor and a memory, the memory storing instructions which, when executed by the processor, cause the processor to carry out steps of the methods described later. The non-geostationary 20 further comprises at least one communication payload, the communication payload comprising at least one transponder configured to receive and send signals towards the celestial body. The signal can be sent in spot beams of different width, for example 40 or 60 degrees (satellite beam half Field of View).

The ground-based device is a device comprising at least a processor and a memory, the memory storing instructions which, when executed by the processor, cause the processor to carry out steps of the methods described later. Preferably, the ground-based device 10 is a mobile device, meaning that the device is able to be moved for example by having a low weight or by comprising means making it able to be moved. Preferably, the ground-based device 10 is a resource-constrained device. It is understood by a resource-constrained device a device comprising a limited processor and/or limited memory such as a low-cost processor and/or a low-cost memory or such as an Internet of Things device, able to connect to an IoT network such as a Sigfox^{®} network, a Lora^{®} network or any other network permitting to link IoT devices. Further, the ground-based device comprises at least a communication module configured to communicate, that is to receive and send signals, at least with the non-geostationary satellite 20. Further, the communication module of the ground-based device 10 can be configured to communicate through a ground-based IoT network or through any other network, via wired means or wirelessly, for example towards a ground-based station 30. To communicate through a ground-based IoT network or through any other network, via wired means or wirelessly, for example towards a ground-based station 30, the ground-based device 10 can comprise another communication module. In the example represented at Figure 1, the ground-based device 10 is unable to reach the ground-based station 30 directly or to reach a network permitting to reach the ground-based station 30. The ground-based device 10, preferably resource-constrained, is able to reach the non-geostationary satellite 20 using any wireless mean.

The ground-based station 30 is a device comprising at least a processor and a memory, the memory storing instructions which, when executed by the processor, cause the processor to carry out steps of the methods described later. Preferably, the ground-based station 30 is fixed, meaning that the device is not able to be moved. The ground-based station 30 can also be mobile, meaning that it can be moved. Preferably, the ground-based station 30 is linked to a network to transmit information received from non-geostationary satellites 20. Preferably, the ground-based station 30 is not a resource-constrained device, as it would be required to perform computing, storing and data transmission. Preferably, the ground-based station 30 is able to connect to an IoT network such as a Sigfox^{®} network, a Lora^{®} network or any other network permitting to link IoT devices. Further, the ground-based station 30 comprises at least a communication module configured to communicate, that is to receive and send signals, at least with the non-geostationary satellite 20. Further, the communication module of the ground-based station 30 can be configured to communicate through a ground-based IoT network or through any other network, via wired means or wirelessly, for example towards another ground-based station, towards a ground-based device, or towards a data center. To communicate through a ground-based IoT network or through any other network, via wired means or wirelessly, the ground-based station 30 can comprise another communication module. In the example represented at Figure 2, the ground-based station 30 is able to reach the non-geostationary satellite 20 using wireless means.

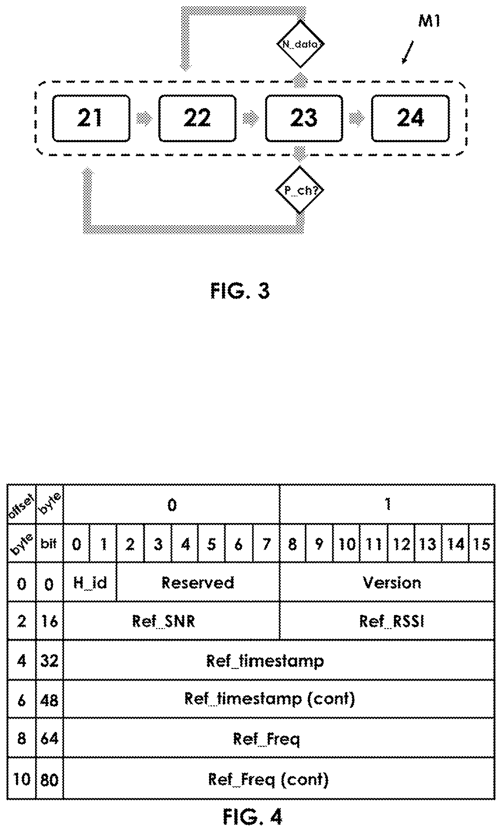

A first method according to the invention is represented Figure 3. The method M1 represented Figure 3 is carried out by the non-geostationary satellite 20 and comprises four steps. The method M1 is a compression method for the storing and transmission of a plurality of pieces of data by the non-geostationary satellite 20 to the ground-based station 30, the compression method M1 comprising encoding the pieces of data in a predefined frame format. Preferably, the pieces of data of the plurality of pieces of data have been sent preferably from resource-constrained devices 10.

In a first step 21 of the method M1, the non-geostationary satellite 20 creates a frame comprising at least one global header comprising at least one parameter field, the parameter field comprising a reference value of a parameter. Preferably, the frame is a binary frame. The parameter can be any parameter linked to signals received later. For example, parameters can include but are not limited to a timestamp, for example the time at which the frame or the global header was created, a reference RSSI (Received Signal Strength Indicator) such as an expected RSSI for future received signals, a reference frequency, such as an expected frequency for future received signals or the starting frequency of the expected radio channel in Hz, a reference SNR (Signal to Noise Ratio), such as an expected SNR for future received signals. It can be understood by a "reference" value of a parameter or by an "expected" value of a parameter a mean value for the parameter in a system operating in a normal manner. It can also be understood to be any value expected to be received or any value that can be compared to a future received value. Preferably, the global header comprises parameter field(s) for each parameter that is wished to be transmitted to the ground-based station 30. Preferably again, the global header comprises parameter field(s) for each parameter that is longer to be stored in the chosen format, for example in a binary format, than the mean difference that will be stored. For example, storing an RSSI can take up to 1 byte or more, while storing the difference between a reference RSSI and the RSSI of a received signal can take 5 bits or even less depending on the difference in value.

An example of a global header is represented at Figure 4. The example of global header represented at Figure 4 is in no way a limitation of the invention. The global header represented at Figure 4 comprises four parameter fields, each parameter field comprising the value of a reference parameter. Thus, the global header comprises a reference SNR Ref_SNR, a reference RSSI Ref_RSSI, a reference timestamp of the time of creation of the global header Ref_timestamp, a reference frequency Ref_Freq. The global header can further comprise an identifier H_id to identify the type of header, i.e. whether it is a global header or a packet header, as it will be seen later. It is possible to avoid the identifier if the global header G_header comprises the number of data packets attached to it. The global header can further comprise a version field, to be able to update the frame format.

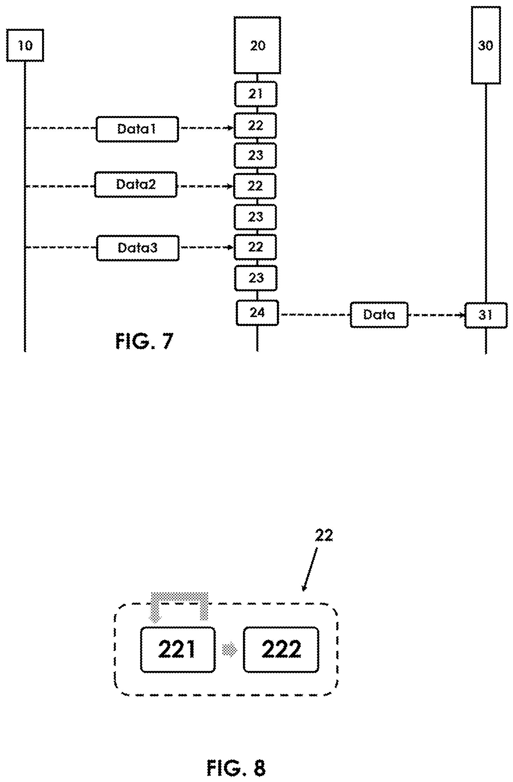

In a second step 22, the non-geostationary satellite 20 receives at least one signal. The received signal comprises at least one piece of data Data1 as represented at Figure 7. It is understood by "piece of data" any piece of information that can be processed, stored and transmitted. Preferably, the signal was sent by the ground-based, resource-constrained, device 10. Preferably, a piece of data is an information related to the ground-based device 10, or created by the ground-based device 10. For example, a piece of data can be a measurement of a physical quantity performed by the ground-based device 10, for example using a sensor, or can be related to the state of the ground-based device 10, or can be any piece of data that has to be transmitted to a network unreachable directly by the ground-based device 10. The step 21 of receiving a signal can comprise a sub-step (not represented) of demodulating the signal using a demodulator module comprised in the non-geostationary satellite 20.

In a third step 23, upon receiving at least one piece of data of the plurality of pieces of data, the non-geostationary satellite 20 adds at least one data packet to the frame, the data packet comprising:
- A packet header comprising at least one delta parameter field, the delta parameter field comprising the difference value between the value of the parameter for the received piece of data and the reference value of the parameter of the global header,
- A data payload comprising at least part of the received piece of data.

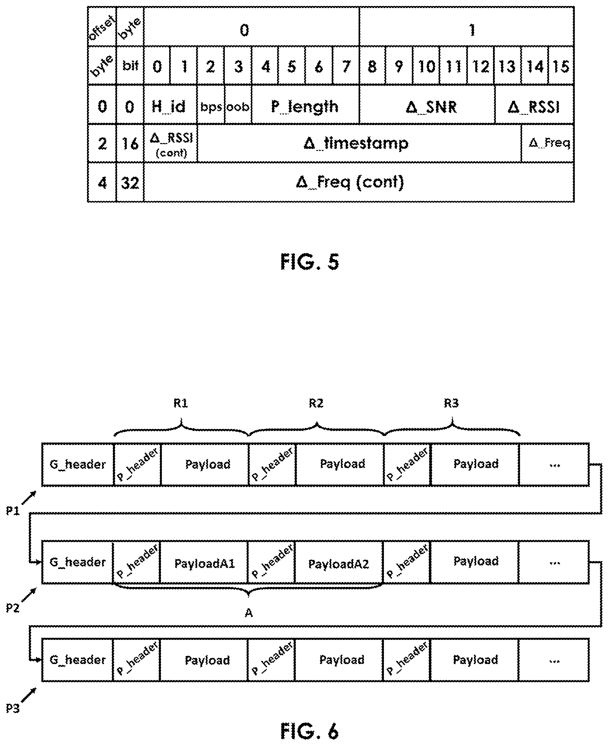

An example of a packet header is represented at Figure 5. The example of packet header represented at Figure 5 is in no way a limitation of the invention. The packet header represented at Figure 5 comprises four delta parameter fields, each delta parameter field comprising the difference value between the value of the parameter for the received piece of data and the reference value of the parameter of the global header. For example, and as represented at Figure 5, the packet header can comprise a delta SNR field Δ_SNR, that is the difference value between the SNR of the received signal and the reference SNR of the global header to which the data packet will be concatenated or attached. For example, and as represented at Figure 5, the packet header can comprise a delta RSSI field Δ_RSSI, that is the difference value between the RSSI of the received signal and the reference RSSI of the global header to which the data packet will be concatenated or attached. For example, and as represented at Figure 5, the packet header can comprise a delta timestamp field Δ_timestamp, that is the time difference between a time linked to the received signal such as the time of emission or of reception of the signal, and the reference timestamp of the global header such as the time of creation of the global header or any other reference timestamp. For example, and as represented at Figure 5, the packet header can comprise a delta frequency field Δ_freq, that is the difference value between the frequency of the received signal in Hz and the reference frequency of the global header to which the data packet will be concatenated or attached. The packet header can further comprise an identifier H_id to identify the type of header, i.e. whether it is a global header or a packet header. It is possible to avoid the identifier if the global header G_header comprises the number of data packets attached to it. This allows further reducing the storage and bandwidth needed. The packet header can further comprise a "bps" field indicating the data rate in bits per second, for example by using 0b0 to represent 100 bps and 0b1 to represent 600 bps. The packet header can further comprise a "oob" field indicating if the message has been demodulated out of band, for example by using 0b0 if the message has been received in band and 0b1 if the message has been received out of band. The packet header can further comprise a p_length parameter field indicating the length of the data payload following the packet header.

It is understood by "adding to the frame" concatenating to the frame or attaching after the global header the data packet. For example, as represented at Figure 6, adding to the frame P1 a data packet R1 after the first global header G_header results in a frame P1 comprising a global header G_header, a packet header p_header and a payload Payload. Upon receiving another signal, as represented at Figure 7, that is upon receiving another piece of data Data2 from for example another ground-based device resource-constrained device 10, the steps 22 and 23 are reiterated, i.e. another data packet R2 is added with its own delta values in its p_header and its own payload. That is also represented at Figure 3 with the "N_data?" arrows indicating the reception of new data.

The global header G_header can define a maximum number of data packets that can be attached to it or a maximum size that can be attached to it. If the maximum number of data packets or the maximum size is reached, the method M1 can restart at the first step 21 of creating a frame P2, another global header G_header can be created and a new data packet can be added to P2 after the global header G_header. This maximum number of data packets or maximum size is limited to a maximum time gap between the first message and the last message included under a G_header, which is for example about 1 hours and 8 minutes.

When the non-geostationary satellite 20 passes over a ground-based station 30, the method M1 can comprise a step 24 of transmitting the created frame or the created frames from the non-geostationary satellite 20 to the ground-based station 30.

The reference value of the parameter can change. For example, when a new reference frequency has to be used because the non-geostationary satellite 20 passes over a new region and the new region has a different regulatory frequency than the previous region the non-geostationary satellite 20 passed over, the reference frequency Ref_Freq of the global header G_header has to be changed or that could lead to larger value differences and therefore to storing more data than necessary. When the reference value of the parameter changes or has to be changed, a new global header G_header has to be created. The steps 21 to 23 of the method are reiterated, i.e. a new global header G_Header and a new frame are created. This is represented at Figure 3 with the "P_ch?" arrows indicating a reference parameter change. The reference timestamp can also be changed every given period, so as not to store too long time differences. For example, the Δ_timestamp parameter can have a range of [0;4095], meaning that the reference timestamp ref_timestamp of the global header G_Header has to be changed every 4095 unit (for example second or millisecond depending on the chosen unit).

In an embodiment, the global header G_Header can comprise a size parameter p_length comprising a maximum size of the packet or a maximum size of the payload of the data packet. The step 22 of the method M1 can then be divided in two sub-steps, as represented at Figure 8 : a sub-step 221 of fragmenting a received piece of data into a plurality of data payloads as a function of the size parameter and a sub-step 222 of adding the plurality of data packets to the frame.

In a first sub-step 221 of step 22, a received piece of data, for example received from a ground-based device 10, is fragmented into a plurality of other pieces of data as a function of the size parameter p_length. That is, if the maximum data payload size defined by the size parameter p_length is of 24 bits, and if the piece of data is 48 bits-long, the piece of data is fragmented into two pieces of data.

In a second sub-step 222 of step 22, the pieces of data created from the fragmentation of the received piece of data are formatted in a data packet, each data packet being added to the frame and comprising a packet header and a data payload. For example, as represented at Figure 6, the received piece of data A is fragmented into two pieces of data A1 and A2 and is formatted as two data packets, the first data packet comprising the payload PayloadA1 comprising A1 and the second data packet comprising the payload PayloadA2 comprising A2.

The method M1 according to the invention permits to compress the received data by formatting the received data in a particular format. The format keeps consistency of data related to the received data. The data related to received pieces of data can also be called parameters or "meta-data". By only storing the formatted data less storage space is used as compared to storing raw received pieces of data and raw associated metadata.

The non-geostationary satellite 20 orbiting a celestial body such as the Earth collects data from ground-based device 10, for example from resource-constrained devices. As it receives pieces of data, the non-geostationary satellite 20 formats the received pieces of data and concatenates them to the created frame. After for example one orbital period, the non-geostationary satellite 20 passes over a ground-based station 30 and transmits the frame or frames created during the collection of data. It therefore clears up its storage for data collection during the next orbital period to come. During one orbital period, the non-geostationary satellite 20 can also pass over several ground-based stations 30 and have a more important data collection capacity as it clears up at least part of its storage every time it passes over a ground-based station 30.

## Claims

1. Compression method (M1) for the storing and transmission of a plurality of pieces of data by a non-geostationary satellite (20) to a ground-based station (30), the compression method (M1) being performed by the non-geostationary satellite (20) and comprising encoding the pieces of data in a predefined frame format, the encoding comprising:
- creating a frame (21) comprising at least one global header (G_header) comprising at least one parameter field (Ref_SNR, Ref_RSSI, Ref_timestamp, Ref_Freq), the parameter field (Ref_SNR, Ref_RSSI, Ref_timestamp, Ref_Freq) comprising a reference value of a parameter,
the compression method being **characterized in that** the encoding further comprises :
- upon receiving (22) at least one piece of data of the plurality of pieces of data, adding (23) at least one data packet to the frame, the data packet comprising:
- A packet header comprising at least one delta parameter field (Δ_SNR, Δ_RSSI, Δ_timestamp, Δ_freq), the delta parameter field (Δ_SNR, Δ_RSSI, Δ_timestamp, Δ_freq) comprising the difference value between the value of the parameter for the received piece of data and the reference value of the parameter of the global header (G_header),
- A data payload (Payload) comprising at least part of the received piece of data.

2. Method (M1) according to the preceding claim wherein the parameter is a frequency, a timestamp, a RSSI or an SNR.

3. Method (M1) according to any one of the previous claims wherein the frame is a binary frame.

4. Method (M1) according to any one of the preceding claims wherein the method further comprises a step of transmitting (24), to the ground-based station (30), the frame.

5. Method (M1) according to any one of the preceding claims wherein the frame format comprises a size parameter, the size parameter (p_length) comprising a maximum size for the data payload (Payload) of the data packet, and in that, upon receiving (22) the at least one piece of data, the method (M1) first comprises a sub-step (221) of fragmenting the received piece of data into a plurality of data payloads as a function of the size parameter (p_length) and a plurality of data packets are added to the frame.

6. Method (M1) according to any one of the preceding claims wherein the steps of the method (M1) are carried out for each change of the reference value of the parameter of the global header (G_header).

7. Non-geostationary satellite (20) configured to carry out the method (M1) according to any one of the preceding claims.

8. Non-geostationary satellite (20) according to the preceding claim wherein the non-geostationary satellite is a low Earth orbit satellite.

9. Communication system comprising at least one non-geostationary satellite (20) according to any one of claims 7 or 8 and at least one ground-based station (30).

10. Communication system according to the previous claim wherein the communication system further comprises a ground-based device (10).

11. Computer program product comprising instructions which, when the program is executed by a computer, cause the computer to carry out the steps of the method (M1) according to any one of claims 1 to 6.

12. Computer-readable medium comprising instructions which, when executed by a computer, cause the computer to carry out the steps of the method (M1) according to any one of claims 1 to 6.

## Patentansprüche

1. Komprimierungsverfahren (M1) zur Speicherung und Übertragung einer Vielzahl von Daten durch einen nicht-geostationären Satelliten (20) an eine bodengestützte Station (30), wobei das Komprimierungsverfahren (M1) von der nicht-geostationären Station (20) durchgeführt wird und die Kodierung der Daten in ein vordefiniertes Rahmenformat umfasst, wobei die Kodierung Folgendes umfasst:
- die Erstellung eines Rahmens (21), der mindestens einen globalen Header (G_header) umfasst, der mindestens ein Parameterfeld (Ref_SNR, Ref_RSSI, Ref_timestamp, Ref_Freq) enthält, wobei das Parameterfeld (Ref_SNR, Ref_RSSI, Ref_timestamp, Ref_Freq) einen Referenzwert eines Parameters enthält;
wobei das Komprimierungsverfahren **dadurch gekennzeichnet ist, dass** die Kodierung ferner umfasst:
- beim Empfang (22) mindestens eines der mehreren Daten das Hinzufügen (23) mindestens eines Datenpakets zum Rahmen, wobei das Datenpaket umfasst:
- einen Paket-Header, der mindestens ein Delta-Parameterfeld (Δ_SNR, Δ_RSSI, Δ_timestamp, Δ_freq) umfasst, wobei das Delta-Parameterfeld (Δ_SNR, Δ_RSSI, Δ_timestamp, Δ_freq) den Abweichungswert zwischen dem Wert des Parameters für die empfangenen Daten und dem Referenzwert des Parameters des globalen Headers (G_header) umfasst,
- eine Datennutzlast (Payload), die mindestens einen Teil der empfangenen Daten umfasst.

2. Verfahren (M1) nach dem vorstehenden Anspruch, bei dem der Parameter eine Frequenz, ein Zeitstempel, ein Indikator für die empfangene Signalstärke (RSSI) oder ein Signal-Rausch-Verhältnis (SNR) ist.

3. Verfahren (M1) nach einem der vorstehenden Ansprüche, bei dem der Rahmen ein binärer Rahmen ist.

4. Verfahren (M1) nach einem der vorstehenden Ansprüche, bei dem das Verfahren ferner einen Schritt (30) zum Senden des Rahmens an die bodengestützte Station (24) umfasst.

5. Verfahren (M1) nach einem der vorstehenden Ansprüche, bei dem das Rahmenformat einen Größenparameter umfasst, wobei der Größenparameter (p_length) eine maximale Größe für die Datennutzlast (Payload) des Datenpakets umfasst, und bei dem beim Empfang (22) der mindestens einen Datenmenge das Verfahren (M1) zunächst einen Teilschritt (221) umfasst, bei dem die empfangenen Daten entsprechend dem Größenparameter (p_length) in eine Vielzahl von Datennutzlasten fragmentiert werden und eine Vielzahl von Datenpaketen dem Rahmen hinzugefügt wird.

6. Verfahren (M1) nach einem der vorstehenden Ansprüche, bei dem die Verfahrensschritte (M1) bei jeder Änderung des Referenzwerts des Parameters des globalen Headers (G_header) durchgeführt werden.

7. Nicht-geostationärer Satellit (20), der zur Durchführung des Verfahrens (M1) nach einem der vorstehenden Ansprüche konfiguriert ist.

8. Nicht-geostationärer Satellit (20) nach dem vorstehenden Anspruch, bei dem der nicht-geostationäre Satellit ein Satellit in einer niedrigen Umlaufbahn ist.

9. Kommunikationssystem, das mindestens einen nicht-geostationären Satelliten (20) nach einem der Ansprüche 7 oder 8 und mindestens eine bodengestützte Station (30) umfasst.

10. Kommunikationssystem nach dem vorstehenden Anspruch, bei dem das Kommunikationssystem ferner eine bodengestützte Vorrichtung (10) umfasst.

11. Computerprogrammprodukt, das Befehle umfasst, die, wenn sie von einem Computer ausgeführt werden, den Computer veranlassen, die Schritte des Verfahrens (M1) nach einem der Ansprüche 1 bis 6 auszuführen.

12. Computerlesbares Medium, das Befehle enthält, die, wenn sie von einem Computer ausgeführt werden, den Computer veranlassen, die Verfahrensschritte (M1) nach einem der Ansprüche 1 bis 6 auszuführen.

## Revendications

1. Procédé de compression (M1) pour le stockage et la transmission d'une pluralité de données par un satellite non géostationnaire (20) à une station basée au sol (30), le procédé de compression (M1) étant réalisé par la station non géostationnaire (20) et comprenant l'encodage des données sous un format de trame prédéfini, l'encodage comprenant :
- la création d'une trame (21) comprenant au moins un en-tête global (G_header) comprenant au moins un champ de paramètre (Ref_SNR, Ref_RSSI, Ref_timestamp, Ref_Freq), le champ de paramètre (Ref_SNR, Ref_RSSI, Ref_timestamp, Ref_Freq) comprenant une valeur de référence d'un paramètre ;
le procédé de compression étant **caractérisé en ce que** l'encodage comprend en outre :
- lors de la réception (22) d'au moins une donnée de la pluralité de données, l'ajout (23) d'au moins un paquet de données à la trame, le paquet de données comprenant :
- un en-tête de paquet comprenant au moins un champ de paramètre delta (Δ_SNR, Δ_RSSI, Δ _timestamp, Δ_freq), le champ de paramètre delta (Δ_SNR, Δ_RSSI, Δ _timestamp, Δ_freq) comprenant la valeur d'écart entre la valeur du paramètre pour la donnée reçue et la valeur de référence du paramètre de l'en-tête global (G_header),
- une charge utile de donnée (Payload) comprenant au moins une partie de la donnée reçue.

2. Procédé (M1) selon la revendication précédente, dans lequel le paramètre est une fréquence, une estampille temporelle, un indicateur de puissance de signal reçu (RSSI) ou un rapport signal sur bruit (SNR).

3. Procédé (M1) selon l'une quelconque des revendications précédentes, dans lequel la trame est une trame binaire.

4. Procédé (M1) selon l'une quelconque des revendications précédentes, dans lequel le procédé comprend en outre une étape de transmission (30), à la station basée au sol (24) de la trame.

5. Procédé (M1) selon l'une quelconque des revendications précédentes, dans lequel
le format de trame comprend un paramètre de taille, le paramètre de taille (p_length) comprenant une taille maximale pour la charge utile de donnée (Payload) du paquet de données, et dans lequel, lors de la réception (22) de l'au moins une donnée, le procédé (M1) comprend tout d'abord une sous-étape (221) de fragmentation de la donnée reçue en une pluralité de charges utiles de donnée en fonction de la taille de paramètre (p_length) et une pluralité de paquets de données sont ajoutés à la trame.

6. Procédé (M1) selon l'une quelconque des revendications précédentes, dans lequel les étapes du procédé (M1) sont effectuées pour chaque évolution de la valeur de référence du paramètre de l'en-tête global (G_header).

7. Satellite non géostationnaire (20) configuré pour effectuer le procédé (M1) selon l'une quelconque des revendications précédentes.

8. Satellite non géostationnaire (20) selon la revendication précédente, dans lequel le satellite non géostationnaire est un satellite sur orbite basse.

9. Système de communication comprenant au moins satellite non géostationnaire (20) selon l'une quelconque des revendications 7 ou 8 et au moins une station basée au sol (30).

10. Système de communication selon la revendication précédente, dans lequel le système de communication comprend en outre un dispositif basé au sol (10).

11. Produit-programme d'ordinateur comprenant des instructions qui, lorsqu'elles sont exécutées par un ordinateur, amènent l'ordinateur à effectuer les étapes du procédé (M1) selon l'une quelconque des revendications 1 à 6.

12. Support lisible par ordinateur comprenant des instructions qui, lorsqu'elles sont exécutées par un ordinateur, amènent l'ordinateur à effectuer les étapes du procédé (M1) selon l'une quelconque des revendications 1 à 6.
